# EUROPEAN PATENT APPLICATION

(11) **EP 1 580 494 A1**
(43) Date of publication of application: **28.09.2005**
(21) Application number: 05102055.0
(22) Date of filing: 16.03.2005
(51) Int. Cl.: F24F 13/24, F16L 55/033

(54) **Silencer for ventilating duct**

(30) Priority: 24.03.2004 FI 20040130 U
(71) Applicant: Uponor Innovation AB, 513 81 Fristad (SE)
(72) Inventor: Juuti, Rauno, 15550, Nastola (FI)
(74) Representative: Huhtanen, Ossi Jaakko

(57) **Abstract**

A silencer for a ventilating duct, the silencer comprising an external layer (1) and a sound-absorbing layer (2) inside the external layer. A duct (3) is provided through the sound-absorbing layer (2). Air flows along the duct (3). The silencer comprises separate end pieces (4) constituting the ends of the silencer and from which the silencer is connectible to the ventilating duct.

## Description

### BACKGROUND OF THE INVENTION

The invention relates to a silencer for a ventilating duct, the silencer comprising an external layer and a sound-absorbing layer inside the external layer, through which sound-absorbing layer a duct is provided along which air flows.

At present, a silencer for a ventilating duct is typically a casing inside of which a sound-absorbing insulator is arranged. A duct is arranged through the insulator and the ends of the casing comprise fittings from which the silencer is fastened to the ventilating duct. Air flows through the silencer along the duct in the middle of the insulator. Such a silencer is disclosed in publication DK 165,564. In said solution, a mineral fibre insulator, such as glass wool or mineral wool, is employed as the insulator, which is not a satisfactory solution, since particles are detached from the insulator into the air flowing in the ventilating duct.

The need for noise suppression depends for instance on the size of the diameter of the ventilating duct and on the magnitude of the airflow. In addition, in different spaces, different requirements are set on the allowed noise level. Accordingly, different noise suppression capacities are required for different uses. For this reason, various silencers have to be manufactured in order for the right kind of silencer to be found for each use. As a result of this, various silencers have to be in storage and at the construction site, which complicates storage and logistics.

### BRIEF DESCRIPTION OF THE INVENTION

The object of the present invention is to provide a new type of silencer for a ventilating duct.

The silencer according to the invention is characterized in that the silencer comprises separate end pieces constituting the ends of the silencer and from which the silencer is connectible to the ventilating duct.

The essential idea of the invention is that the silencer comprises an external layer and a sound-absorbing layer inside the external layer, through which sound-absorbing layer a duct is provided along which air flows. The silencer further comprises separate end pieces that constitute the ends of the silencer and from which the silencer is connected to the ventilating duct. Such a silencer is simple and easy to manufacture and to form suitable as regards its noise suppression properties, for example.

The essential idea of an embodiment is that the external layer and the sound-absorbing layer are dimensioned in a certain manner and different noise suppression characteristics are determined for dimensions shorter than this dimension. At the construction site, the external layer and the sound-absorbing layer may be cut into the desired dimension. Once the external layer and the sound-absorbing layer are provided, cut into the desired dimension, then, after the cutting, with the end pieces in their places, a silencer provided with the desired noise suppression characteristics is accomplished. Accordingly, a silencer delivered to the construction site may be exactly similar each time, and a silencer provided with the desired noise suppression characteristics is made at the construction site according to the need. Consequently, several different silencers do not have to be stored and transported, but it is sufficient that the length of the external layer and the sound-absorbing layer is given and the number of end pieces is sufficient. This considerably facilitates the manufacture, storage and logistics of silencers.

The idea of a second embodiment is that the external layer is arranged shorter than the sound-absorbing layer, and the sound-absorbing layer is made from a flexible material, whereby the silencer is detachable from the duct by moving the end piece in a manner shortening the silencer.

The idea of a third embodiment is that the end piece is arranged to comprise at least two connecting fittings having different diameters, whereby at least two different ventilation ducts having different diameters are thus adaptable to the end piece.

### DETAILED DESCRIPTION OF THE INVENTION

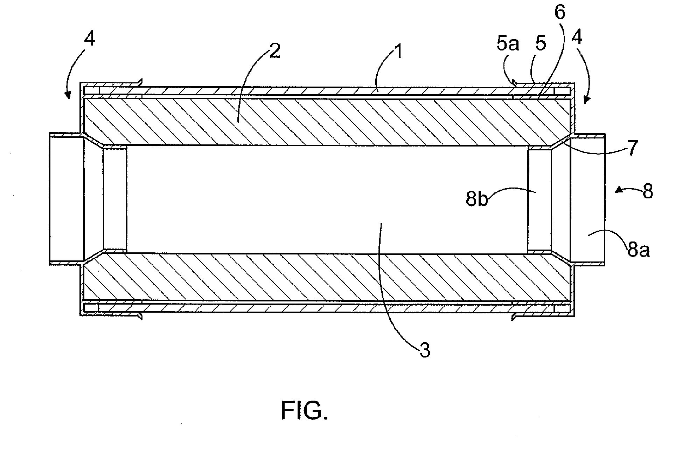

The invention will be described in more detail in the attached figure, which is a schematic cross-sectional side view of a silencer.

The figure shows a silencer for a ventilating duct, the silencer comprising an external layer 1 outermost. The external layer 1 is preferably tubular. The external layer 1 may be composed of an air pipe similar to the remainder of the ventilation system. However, in the silencer the inner surface of the external layer 1 does not have to be antistatic. However, for instance the colour and shape of the outer surface of the external layer 1 can be made to correspond to an air pipe. This being so, the appearance of the silencer does not significantly differ from the rest of the ventilation system. The external layer 1 may be for instance of plastic, such as polypropylene PP. The external layer 1 may also be made from another plastic, such as polyethylene PE, cross-linked polyethylene PEX or polyvinyl chloride PVC. The use of other plastics or other materials suitable for the purpose is also possible.

A sound-absorbing layer 2, i.e. an insulator layer, is arranged inside the external layer 1. The sound-absorbing layer is made from a porous, sound-absorbing material suitable for the purpose. The sound-absorbing layer 2 is preferably of polyester fibre, for example. Some other porous material suitable for the purpose, such as open-cell foam plastic, may also be used as the material of the sound-absorbing layer 2. The sound-absorbing layer 2 is preferably made from a material from which particles are not detached to the air flowing through the silencer. Inside of the sound-absorbing layer 2 is provided a duct 3, along which the air flowing through the silencer passes.

The silencer is composed in such a manner that an insulator is pushed to the inside of the pipe constituting the external layer 1, the insulator thus providing the sound-absorbing layer 2. The sound-absorbing layer 2 is fastened at its ends to the external layer 1 with end pieces 4. The end piece 4 comprises an outer fastening sleeve 5, which is pressed against the external layer 1. The end of the outer fastening sleeve 5 is provided with a conical part 5a, which facilitates the installation of the outer fastening sleeve 5 of the end piece 4 on top of the external layer 1. The end piece 4 may further comprise an inner fastening sleeve 6, which settles against the inner surface of the external layer 1, the end piece 4 being firmly fastened to the external layer 1. The end piece 4 is sealed to the external layer 1 in the desired manner. For the sealing, foam polyethylene band sealant, for example, can be used.

The end piece 4 further comprises a conical part 7 pointing inwards to the silencer and wedging the sound-absorbing layer 2 into the external layer 1, thus fastening said insulator layer to the external layer 1. The conical part 7 further guides the airflow smoothly to the inside of the silencer in such a manner that pressure loss is not substantially created, nor does said point substantially generate noise.

The end piece 4 further comprises a connecting sleeve 8, whose broader part 8a is formed outwardly and into which a duct having a larger diameter is adaptable. The inwards pointing conical part 7 extends as a part 8b of the connecting sleeve 8, the part having a smaller diameter, whereby a duct having a smaller diameter can be fastened to this part having a smaller diameter. Accordingly, the same end piece 4 can be employed in connection with both ducts having a larger diameter and ducts having a smaller diameter. Furthermore, a duct having a larger diameter can be fastened to one end of the silencer, and a duct having a smaller diameter to the other end.

The material of the end piece 4 can correspond to that of the external layer 1. Accordingly, extremely beneficial materials include polypropylene PP, polyethylene PE, cross-linked polyethylene PEX and polyvinyl chloride PVC, for example. The inner surface of the end piece 4 is preferably made antistatic, whereby it does not collect dust and other impurities. The end piece 4 and the external layer 1 are both made such that they fulfil fire protection requirements. Consequently, a suitable flameproof substance can be applied to their outer surfaces. The end piece 4 can be made by means of injection moulding, for example.

The external layer 1 is preferably made shorter than the sound-absorbing layer 2. The sound-absorbing layer 2 is further preferably made from a flexible material. This being so, the end pieces 4 are insertable inwardly into the silencer, allowing the silencer to be rendered temporarily shorter. In this case, the silencer can thus be made replaceable, i.e. by moving the end pieces towards one another enables the removal of the silencer from the duct system. The removal can be performed for instance because the sound absorbing layer 2 inside the silencer is to be replaced with a new one.

The length of the silencer is made constant. The damping capacity of the silencer is determined by testing for different lengths. This being so, when required, a longer piece can be sawn into a shorter silencer to achieve the required damping degree. This means that a separate silencer is not required for different damping needs, but the desired damping capacity is achieved by arranging the lengths of the external layer 1 and the sound absorbing-layer 2 correctly.

The damping capacity of the silencer is different at different frequencies. Accordingly, on the basis of experiments, the different lengths of the silencer are given damping capacities for different frequencies in the form of a table or a curve. When desired, these tables or curves can be marked for instance with an ink jet printer on the outer surface of the external layer 1. On the basis of the tables or curves, a ventilation designer is able to relatively simply dimension the required length of the silencers on the basis of the location and its damping requirement.

Since the end pieces 4 of the silencer are suitable for the duct system, and the external layer 1 preferably corresponds to the appearance of the duct system, it is easy later to replace the silencer with a longer one, when required. The length of the silencer may initially be made for instance three metres long, and it is cut into a suitable dimension at the construction site. For example, in connection with a three-metre silencer, eight end pieces 4 may be delivered, i.e. one sales package can be used to generate 1 to 4 complete silencers. For example, in a detached house, an about one-metre silencer can be arranged in the supply air duct and the exhaust air duct in connection with a supply air blower and an exhaust air blower, and, in addition, an about one half-metre silencer in the supply air ducts in connection with the bedrooms, for example.

The diameter of the external layer 1 may vary between 200 and 500 mm, for example. The thickness of the sound-absorbing layer 2, in turn, may vary between 30 and 100 mm, for example. The diameter of the duct 3, in turn, is arranged to be close to the diameter of the ventilating duct connected to the silencer. However, the diameter of the duct 3 may be slightly smaller than the diameter of the ventilating duct without excessive choking of the airflow. An example of the dimensioning of the diameters is that the smaller diameter of the connecting sleeve 8 of the end piece 4 is 125 mm and the larger diameter is 160 mm. This being so, the diameter of the duct 3 is 125 mm. Furthermore, in this case, the thickness of the sound-absorbing layer 2 is for instance 50 mm and the diameter of the external layer 1 is 225 mm.

The drawings and the related description are only intended to illustrate the idea of the invention. The details of the invention may vary within the scope of the claims. Accordingly, the appearance of the silencer may be for instance angular instead of tubular.

## Claims

1. A silencer for a ventilating duct, the silencer comprising an external layer (1) and a sound-absorbing layer (2) inside the external layer, through which sound-absorbing layer a duct (3) is provided along which air flows, **characterized in that** the silencer comprises separate end pieces (4) constituting the ends of the silencer and from which the silencer is connectible to the ventilating duct.

2. A silencer as claimed in claim **1, characterized in that** the external layer (1) and the sound-absorbing layer (2) are arranged to be of a given length, and different noise suppression characteristics are determined for dimensions shorter than this length, whereby the external layer (1) and the sound-absorbing layer (2) can be cut to the desired length at a construction site, and after the cutting, the end pieces (4) are adaptable in position to the external layer (1) and the sound-absorbing layer (2), cut to the desired length, to generate a silencer provided with the desired noise suppression characteristics.

3. A silencer as claimed in claim 1 or 2, **characterized in that** the external layer (1) is arranged shorter than the sound-absorbing layer (2) and the sound-absorbing layer (2) is made from a flexible material, whereby the silencer is detachable from the duct by moving the end piece (4) in a manner shortening the silencer.

4. A silencer as claimed in any one of the preceding claims, **characterized in that** the end piece (4) comprises such a connecting piece that at least two ventilating ducts having different diameters are adaptable to the end piece.

5. A silencer as claimed in any one of the preceding claims, **characterized in that** the external layer (1) is tubular.

6. A silencer as claimed in any one of the preceding claims, **characterized in that** the sound-absorbing layer (2) is made from a polyester fibre.

7. A silencer as claimed in any one of the preceding claims, **characterized in that** the external layer (1) is made from plastic, preferably from polypropylene PP.

8. A silencer as claimed in any one of the preceding claims, **characterized in that** the end piece (4) is made from plastic, preferably from polypropylene PP.
